# EUROPÄISCHE PATENTSCHRIFT

(11) **EP 2 524 764 B1**
(45) Veröffentlichungstag und Bekanntmachung des Hinweises auf die Patenterteilung: **08.07.2015**
(21) Anmeldenummer: 12003462.4
(22) Anmeldetag: 05.05.2012
(51) Int. Cl.: B23Q 16/00, B27C 3/08, B27F 5/02, B27C 3/06

(54) **Hand-Werkzeugmaschine mit einer Tiefenanschlageinrichtung**
Manually operated machine tool with a depth stop device
Machine-outil manuelle dotée d'une installation de butée de profondeur

(30) Priorität: 19.05.2011 DE 102011102066
(43) Veröffentlichungstag der Anmeldung: 21.11.2012
(73) Patentinhaber: Festool GmbH, 73240 Wendlingen am Neckar (DE)
(72) Erfinder: Rapp, Sibylle, 73054 Eislingen (DE); Holtz, Arne, 73252 Köngen (DE); Stark, Markus, 73272 Neidlingen (DE)
(74) Vertreter: Patentanwälte Bregenzer und Reule Partnerschaftsgesellschaft mbB

(56) Entgegenhaltungen:
- EP-A2- 0 298 221
- DE-C- 961 925
- DE-U1- 20 011 564
- US-A- 6 021 826

## Beschreibung

Die Erfindung betrifft eine Hand-Werkzeugmaschine, insbesondere eine Dübelfräse, gemäß dem Oberbegriff des Anspruchs 1.

Eine derartige Hand-Werkzeugmaschine ist beispielsweise aus DE 10 2008 008 890 A1 bekannt. Bei der bekannten Hand-Werkzeugmaschine ist bei Revolver-Anschlag vorhanden, der verschiedene Längsanschläge bereitstellt, die in den Tiefenverstellweg des an der Anschlageinrichtung ortsfesten Gegenanschlags bzw. der Anschlagfläche einschwenkbar sind. Somit sind mehrere, jedoch nicht individuell fein-einstellbare Anschläge vorhanden. Der bekannte Tiefenanschlagkörper ist quer zum Tiefenverstellweg bzw. zum Verstellweg der Anschlagfläche verschwenkbar.

Eine weitere Hand-Werkzeugmaschine mit einem Anschlag und einem Zeiger ist in DE 200 11 564 U1 beschrieben

Es ist daher die Aufgabe der vorliegenden Erfindung, eine bequem bedienbare Hand-Werkzeugmaschine bereitzustellen.

Zur Lösung der Aufgabe ist eine Hand-Werkzeugmaschine gemäß Anspruch 1 vorgesehen.

Es sind vorteilhaft auch mehrere Fräswerkzeuge, beispielsweise nebeneinander angeordnete Bohrer, Fräser und dergleichen, möglich. Ferner ist die Erfindung auch bei Mehrspindelbohrern, Biskuit-Fräsen oder dergleichen einsetzbar.

Mit einer solchen Tiefenanschlaganordnung sind flexible Werkstückbearbeitungen ohne weiteres möglich. Der Tiefenanschlagkörper ist an der Tiefenanschlag-Lagereinrichtung beweglich, wobei zusätzlich noch mindestens ein Indexkörper vorhanden ist, der die Längsverstellung oder Schwenkverstellung des Tiefenanschlagkörpers auf einen festen Ort begrenzt. Somit können also sehr schnell unterschiedliche Eindringtiefen des Zerspanungswerkzeugs in das Werkstück festgelegt werden, d.h. die Maschine ist besonders effektiv und schnell handhabbar.

Der Indexkörper kann beispielsweise an der Tiefenanschlag-Lagereinrichtung gelagert sein. Es ist aber auch möglich, dass der mindestens eine Indexkörper an einer weiteren, von der Tiefenanschlag-Lagereinrichtung separaten Lagereinrichtung gelagert ist.

Der mindestens eine Indexkörper ist an der Tiefenanschlag-Lagereinrichtung vorzugsweise entlang des Tiefenverstellwegs oder quer dazu beweglich gelagert und fixierbar. So ist beispielsweise eine Längsverstellung des Indexkörpers parallel oder in einem kleinen Winkel zum Längsverstellungsweg des Tiefenanschlagkörpers möglich.

Es ist aber auch möglich, dass der Indexkörper in den Stellweg des Tiefenanschlagkörpers hinein geschwenkt bzw. aus diesem heraus verschwenkbar ist. Der Indexkörper ist in diesem Fall schwenkbar gelagert.

An dieser Stelle sei bemerkt, dass selbstverständlich bei einer erfindungsgemäßen Hand-Werkzeugmaschine beides möglich ist, d.h. ein Indexkörper, der linear beweglich ist, und ein anderer Indexkörper, der schwenkbeweglich ist. Weiterhin ist auch eine Schwenk-Schiebe-Lagerung eines Indexkörpers - oder auch eines Tiefenanschlagkörpers - ohne weiteres möglich.

Bevorzugt ist es, wenn der mindestens eine Indexkörper und der mindestens eine Tiefenanschlagkörper an der Tiefenanschlag-Lagereinrichtung parallel zueinander geführt sind. Die Tiefenanschlag-Lagereinrichtung kann selbstverständlich von einem einzigen Lagerkörper gebildet sein, aber auch mehrteilig sein oder mehrere Komponenten umfassen.

Bevorzugt ist es, wenn der Tiefenanschlagkörper und/oder der mindestens eine Indexkörper an der Tiefenanschlag-Lagereinrichtung linear beweglich und/oder schwenkbeweglich gelagert sind. Es ist aber auch möglich, dass einer der Körper schwenkbeweglich gelagert ist, während der andere linear beweglich ist oder umgekehrt.

Bevorzugt ist eine Verrastung des Tiefenanschlagkörpers an der Tiefenanschlag-Lagereinrichtung. Es ist aber auch möglich, dass der Tiefenanschlagkörper an der Tiefenanschlag-Lagereinrichtung verklemmbar oder verklemmbar und verrastbar ist. Selbstverständlich kann auch ein Indexkörper an der Tiefenanschlag-Lagereinrichtung oder einer sonstigen, den Indexkörper lagernden Komponente, verrastbar, verklemmbar oder beides sein.

Der mindestens eine Tiefenanschlagkörper und ein Anschlag-Widerlagerkörper sind zweckmäßigerweise beweglich, beispielsweise schiebebeweglich, schwenkbeweglich oder beides, zwischen einer Lösestellung und einer Fixierstellung miteinander verbunden. Auch bei dem mindestens einen Indexkörper ist es vorteilhaft, wenn er mit einem Widerlagerkörper, in diesem Fall ein Index-Widerlagerkörper, beweglich zwischen einer Lösestellung und einer Fixierstellung verbunden ist. In der Lösestellung können der Tiefenanschlagkörper bzw. der Indexkörper relativ zu der sie lagernden Komponente, beispielsweise der Tiefenanschlag-Lagereinrichtung, bewegt werden. In der Fixierstellung hingegen sind die jeweiligen Körper (Indexkörper oder Tiefenanschlagkörper) an der sie lagernden Komponente oder bezüglich derselben ortsfest fixiert, beispielsweise verrastet, verklemmt oder beides.

Es ist vorteilhaft, wenn zwischen dem jeweiligen Widerlagerkörper und dem Tiefenanschlagkörper bzw. dem Indexkörper eine Feder oder eine Federanordnung vorgesehen ist, die in Richtung der Fixierstellung wirkt. Somit kann ein Bediener durch einen aktiven Eingriff die Fixierung entgegen der Kraft der Feder lösen. Der jeweilige Tiefenanschlagkörper oder Indexkörper nimmt die Fixierung aufgrund der Feder selbsttätig ein.

Der mindestens eine Tiefenanschlagkörper und/oder der Indexkörper sind vorzugsweise in der Art eines Schlittens, d.h. gleitbeweglich, rollengelagert, kugelgelagert oder dergleichen, an einer Führungsbahn der Tiefenanschlag-Lagereinrichtung oder einer sonstigen, beispielsweise den Indexkörper, lagernden Komponente, die lagert. Somit können der Tiefenanschlagkörper oder der Indexkörper jeweils sehr einfach entlang der Führungsbahn bewegt werden.

Selbstverständlich ist es vorteilhaft, wenn für den Indexkörper oder die Indexkörper mindestens eine Führungsbahn vorhanden ist, die von einer für den Tiefenanschlagkörper vorgesehenen Führungsbahn separat ist. Es versteht sich, dass aber auch ein Indexkörper direkt in der Führungsbahn des Tiefenanschlagkörpers gelagert sein kann. Wenn zwei oder mehr Führungen vorhanden sind, beispielsweise jeweils eine für den mindestens einen Indexkörper und eine andere für den Tiefenanschlagkörper, sind diese Führungen zweckmäßigerweise winkelig zueinander, insbesondere rechtwinkelig.

Besonders bevorzugt ist es, wenn der Tiefenanschlagkörper zwischen zwei oder mehr Indexkörpern beweglich gelagert ist. Somit können z.B. zwei Tiefeneinstellpositionen sehr leicht angefahren werden, d.h. eine Verstellung der Hand-Werkzeugmaschine zwischen zwei unterschiedlichen Eindringtiefen des Zerspanungswerkzeugs ist sehr bequem möglich.

Es ist möglich, dass zwei Indexkörper in einem festen Relativ-Abstand zueinander festgelegt sind. Beispielsweise können die zwei Indexkörper von einem einzigen, insbesondere einstückigen Indexbauteil gebildet sein oder an diesem angeordnet sein. Bevorzugt ist es jedoch, wenn zwei Indexkörper vorhanden sind, die individuell insbesondere an der Tiefenanschlag-Lagereinrichtung oder einer davon separaten Lagereinrichtung beweglich gelagert sind. Somit können die jeweiligen Längspositionen der Indexkörper individuell vom Bediener festgelegt werden, zwischen denen der Tiefenanschlagkörper verstellt, insbesondere verschoben oder verfahren, werden kann.

Bevorzugt ist es, wenn die Tiefenanschlagfläche an einem Führungselement der Führungsanordnung vorgesehen ist. Beispielsweise schlägt eine Stirnseite der Führungsstange an dem Tiefenanschlagkörper an.

Selbstverständlich könnte die Tiefenanschlagfläche auch beispielsweise direkt an der Anschlageinrichtung oder auch an einem Bauteil des Antriebsteils, beispielsweise dessen Gehäuse, vorgesehen sein. Bevorzugt ist eine Anordnung der Tiefenanschlagfläche einen beispielsweise einer Führungsstange der Führungsanordnung.

Das Antriebsteil ist zweckmäßigerweise durch eine Rückstellfeder im Sinne einer Verstellung von der Anschlageinrichtung weg beaufschlagt, d.h. im Sinne einer Verringerung der Eindringtiefe des mindestens einen Zerspanungswerkzeugs in das Werkstück.

Nachfolgend wird ein Ausführungsbeispiel der Erfindung anhand der Zeichnung erläutert. Es zeigen:
- Figur 1: eine perspektivische Schrägansicht einer erfindungsgemäßen Hand-Werkzeugmaschine,
- Figur 2: eine Teil-Schnittansicht durch eine Führungsanordnung und eine Tiefenanschlaganordnung der Hand-Werkzeugmaschine gemäß Figur 1 entlang einer Schnittlinie A-A in Figur 1,

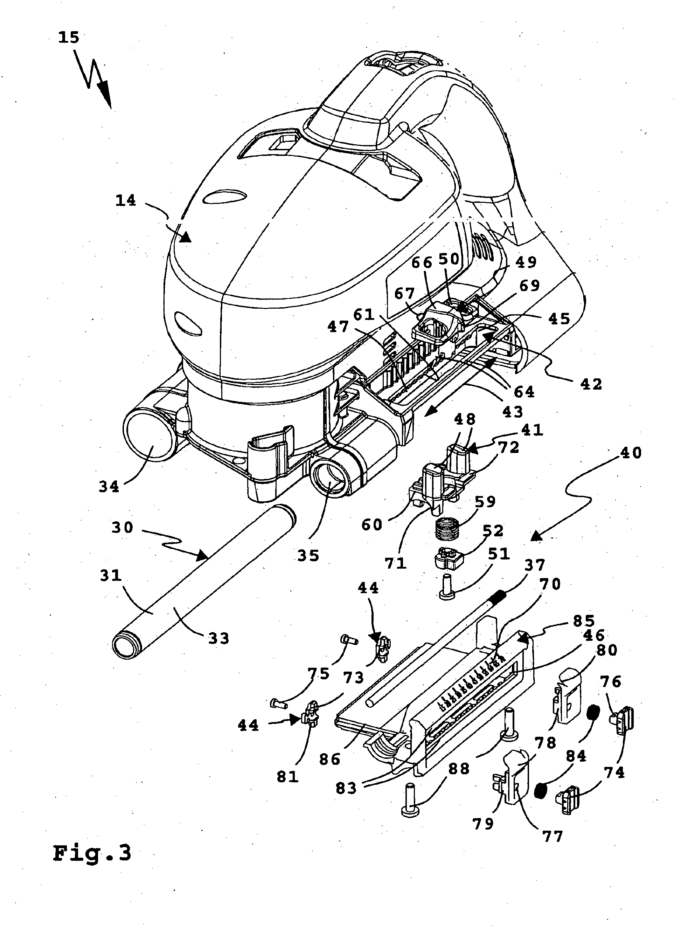

- Figur 3: eine perspektivische Explosionsdarstellung der Tiefenanschlaganordnung und der Führungsanordnung der Hand-Werkzeugmaschine gemäß Figuren 1, 2,

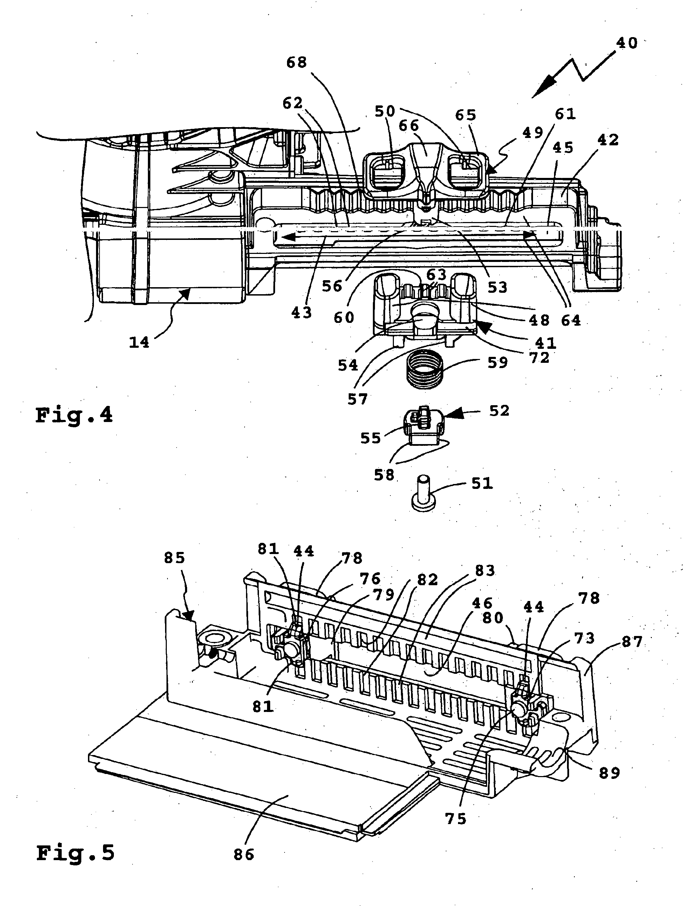

- Figur 4: eine perspektivische Ansicht von schräg oben auf die Tiefenanschlaganordnung gemäß Figur 2, und
- Figur 5: die Tiefenanschlaganordnung gemäß Figur 4 von hinten oder innen.

Eine Hand-Werkzeugmaschine 10 weist einen Antriebsmotor 11 auf, der direkt oder über ein Getriebe 12 ein Zerspanungswerkzeug 13 antreibt. Bei dem Zerspanungswerkzeug 13 handelt es sich vorliegend um einen Fräser. Alternativ sind aber auch beispielsweise Bohrer, Frässcheiben oder Sägeblätter ohne weiteres möglich. Der Antriebsmotor 11 ist in einem Antriebsgehäuse 14 eines Antriebsteils 15 angeordnet. Die Hand-Werkzeugmaschine 10 ist eine elektrische Hand-Werkzeugmaschine, die beispielsweise über ein nicht dargestelltes elektrisches Versorgungskabel oder durch ein an Bord der Hand-Werkzeugmaschine 10 befindliches Energiespeicherbauteil, beispielsweise einen Akkupack, mit elektrischer Energie versorgt wird.

Das Antriebsgehäuse 14 weist einen Handgriff 16 auf, der von einem Bediener umgriffen werden kann. Vom Handgriff 16 aus ist beispielsweise mit dem Daumen ein Antriebsschalter 17 betätigbar, mit dem der Antriebsmotor 11 einschaltbar ist. Der Antriebsmotor 11 ist in einem unteren Gehäusebereich 18 des Antriebsgehäuses 14, beispielsweise unterhalb des Handgriffs 16, angeordnet. Das Getriebe 12 befindet sich in einem dem Handgriff 16 vorgelagerten oberen Gehäusebereich 19 des Antriebsgehäuses 14. Das Zerspanungswerkzeug 13 steht unten frontal vor den Gehäusebereich 13 vor. Das Zerspanungswerkzeug 13 wird vom Antriebsmotor 11 oder motorisch angetrieben. Zudem umfasst das Getriebe 12 ein Pendelgetriebe derart, dass das Zerspanungswerkzeug 13 eine oszillierende Hin- und Herbewegung P durchläuft, um in ein schematisch dargestelltes Werkstück W Ausnehmungen, zum Beispiel Langlöcher, zu fräsen. In eine solche Ausnehmung kann beispielsweise ein Dübel, ein Beschlagteil oder dergleichen eingesetzt werden.

Ein zweckmäßigerweise am Getriebe 12 einstellbarer Schwenkbereich der Hin- und Herbewegung P definiert eine Querlänge der Werkstück-Ausnehmung, während ein Durchmesser des Zerspanungswerkzeugs 13 eine Querbreite der Ausnehmung bestimmt.

Eine Anschlageinrichtung 20 dient zur Anlage der Hand-Werkzeugmaschine 10 an das Werkstück W. Die Anschlageinrichtung 20 weist eine Frontanschlagfläche 21 auf, die zur Anlage an eine Frontseite F des Werkstücks W vorgesehen ist. Die Anschlageinrichtung 20 hat noch weitere Anschlagflächen, beispielsweise zur Anlage an dem Werkstück W. Eine Bodenfläche 22 der Anschlageinrichtung 20 ist beispielsweise winkelig, insbesondere rechtwinkelig, zur Frontanschlagfläche 21. Die Anschlageinrichtung 20 kann mit der Bodenfläche 22 beispielsweise auf eine dem Werkstück W vorgelagerte Fläche aufgelegt werden.

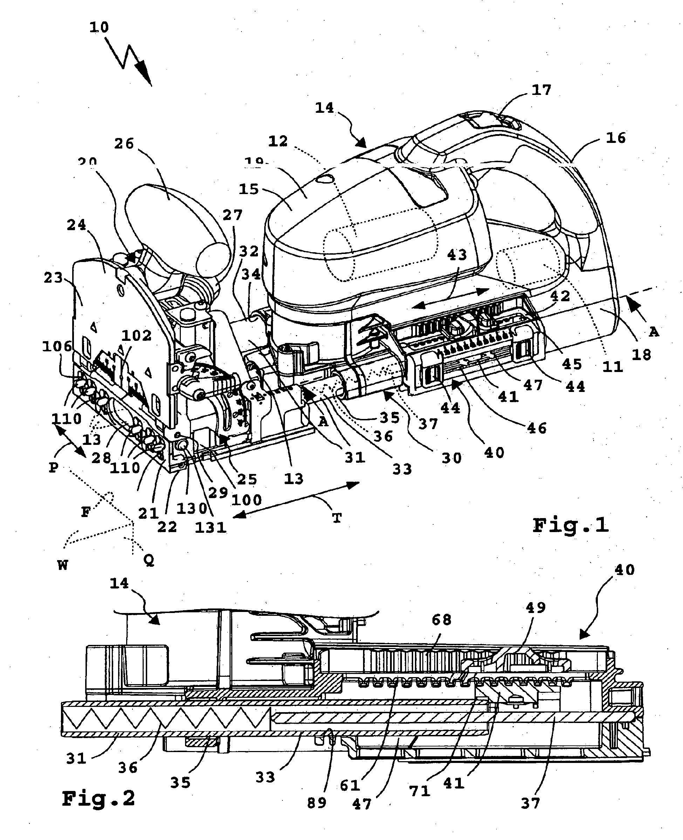

Eine Winkelanlageplatte 23 stellt eine Winkelanschlagfläche 24 bereit, die in der in Figur 1 dargestellten Position der Winkelanlageplatte mit der Frontanschlagfläche 21 fluchtet. Die Winkelanschlagfläche 24 ist um eine Schwenkachse 29 schwenkbar bezüglich der Frontanschlagfläche 21. Eine jeweilige Winkelstellung der Winkelanlageplatte 23 relativ zur Frontanschlagfläche 21 ist mit einer Schwenkeinstelleinrichtung 25 festlegbar. Selbstverständlich ist es vorteilhaft, wenn die beim Ausführungsbeispiel die Winkelanlageplatte 23 auch noch höhenverstellbar ist, so dass ihr Abstand zur Bodenfläche 22 verstellbar ist.

Die Anschlageinrichtung 20 weist zum Ergreifen durch einen Bediener noch einen Handgriff 26 auf, der vorzugsweise nach oben vor die Anschlageinrichtung 20 ergonomisch günstig absteht. Weiterhin ist noch ein Staubabfuhr-Anschluss 27 an der Anschlageinrichtung 20 vorgesehen, über den bei der Bearbeitung des Werkstücks W anfallender Staub oder anfallende Späne abgesaugt werden können.

Die Anschlageinrichtung 20 relativ zum Antriebsteil 15, vorliegend linear, entlang eines Tiefenverstellwegs T verstellbar. Hierfür ist eine Führungsanordnung 30 vorgesehen, die die Anschlageinrichtung 20 linear bezüglich des Antriebsteils 15 führt. Anders formuliert könnte man aber auch sagen, dass das Antriebsteil 15 relativ zu der Anschlageinrichtung 20 geführt ist, da nämlich das Antriebsteil 15 zur Bearbeitung des Werkstücks W zu diesem hin, d.h. zu der Anschlageinrichtung 20 hin, bewegt wird, damit das Zerspanungswerkzeug 13 in das Werkstück W eindringt. Zuvor wird nämlich die Anschlageinrichtung 20 relativ zum Werkstück W positioniert, beispielsweise mit der Frontanschlagfläche 21 an die Werkstück-Frontseite F angelegt. Wenn das Antriebsteil 15 zu der Anschlageinrichtung 20 hin verstellt ist, steht das Zerspanungswerkzeug 13 vor die Frontanschlagfläche 21 vor. Beispielsweise könnte das Zerspanungswerkzeug 13 zwar neben der Frontanschlagfläche 21 angeordnet sein bzw. neben derselben vor diese vorstehen. Beim Ausführungsbeispiel ist jedoch an der Frontanschlagfläche 21 eine Ausnehmung 28 vorgesehen, durch die das Zerspanungswerkzeug 13 bei der Bearbeitung des Werkstücks W vor die Frontanschlagfläche 21 vor stehen kann.

Die Führungsanordnung 30 umfasst an der Anschlageinrichtung 20 festgelegte Führungselemente 31. Die Führungselemente 31 umfassen beispielsweise Stangen, Rohre oder Stäbe 32, 33. Die Führungselemente 31 stehen in Richtung des Antriebsteils 15 bzw. des Antriebsgehäuses 14 vor die Anschlageinrichtung 20 vor. Die Führungselemente 31 sind in Führungsaufnahmen 34, 35 des Antriebsteils 15 verschieblich aufgenommen.

Selbstverständlich könnte bei einer erfindungsgemäßen Hand-Werkzeugmaschine auch ein Führungselement, z.B. eine Stange, vom Antriebsteil abstehen und in eine Führungsaufnahme am Anschlagteil eingreifen.

Die Führungsaufnahmen 34, 35 bilden Linearführungen für die Führungselemente 31. Die Führungsaufnahmen 34, 35 sind beispielsweise seitlich am Antriebsgehäuse 14 angeordnet, so dass sich das Getriebe 12 und/oder der Antriebsmotor 11 zwischen den Führungsaufnahmen 34, 35 befindet. Die Führungsaufnahmen 34, 35 bzw. die Führungselemente 31 verlaufen zweckmäßigerweise parallel zur Bodenfläche 22, wobei schräge Verläufe auch denkbar sind.

Das Antriebsteil 15 und die Anschlageinrichtung 20 sind durch eine Federanordnung in einem Sinne voneinander weg beaufschlagt. Eine Feder 36 beaufschlagt das Antriebsteil 15 z.B. so, dass das Zerspanungswerkzeug 13 hinter die Frontanschlagfläche 21 zurückverstellt wird. Vorzugsweise ist geschützt in einem Innenraum eines oder beider Führungselemente 31 eine Feder 36 angeordnet. Die Feder 36 stützt sich z.B. an einem inneren Anschlag, z.B. der inneren Stirnseite, des Stabes 33 und einem Gegenhalt des Antriebsteils 15 ab, z.B. an einem stabartigen Vorsprung 37, der in den Innenraum des Stabes 33 eintaucht.

Es versteht sich, dass selbstverständlich auch andersartige Führungen, beispielsweise Schwenklagerungen, Linear-Führungselemente, die vom Antriebsteil in Richtung der Anschlageinrichtung abstehen, oder dergleichen, ohne weiteres denkbar sind, auch wenn das beim Ausführungsbeispiel nicht realisiert ist.

Das in der Zeichnung vordere Führungselement 31, der Stab 33, und die Führungsaufnahme 35 wirkt mit einer Tiefenanschlaganordnung 40 zusammen.

Die Tiefenanschlaganordnung 40 umfasst einen Tiefenanschlagkörper 41, der an einer Tiefenanschlag-Lagereinrichtung 42 entlang eines Einstellwegs 43 linear beweglich gelagert ist. Die Tiefenanschlag-Lagereinrichtung 42 ist vorzugsweise zumindest teilweise mit dem Antriebsgehäuse 14 oder einem Getriebegehäuse verbunden, beispielsweise einstückig mit demselben und/oder mittels Schrauben, einer Klebeverbindung oder dergleichen, am Antriebsgehäuse 14 oder dem Getriebegehäuse befestigt.

Der Einstellweg 43 verläuft parallel bzw. in axialer Verlängerung zum Tiefenverstellweg T. Das Führungselement 31, das die Führungsaufnahme 35 durchdringt, steht in eine Ausnehmung 47 der Tiefenanschlag-Lagereinrichtung 42 vor, jedenfalls wenn das Antriebsteil 15 zu der Anschlageinrichtung 20 hin verstellt ist, und schlägt an dem Tiefenanschlagkörper 41 an. Somit bestimmt also eine Längsposition des Tiefenanschlagkörpers 41 relativ zur Tiefenanschlag-Lagereinrichtung 42 die Eindringtiefe des Zerspanungswerkzeugs 13 in das Werkstück W.

Die Tiefenanschlaganordnung 40 weist Indexkörper 44 auf, die ebenfalls an der Tiefenanschlag-Lagereinrichtung 42 beweglich gelagert sind, nämlich parallel zum Tiefenverstellweg T bzw. zum Einstellweg 43. Die Indexkörper 44 sind an einander entgegengesetzten Seiten des Tiefenanschlagkörpers 41 angeordnet und können dessen Verstellung entlang des Einstellwegs 43 begrenzen. Der Tiefenanschlagkörper 41 kann zwischen den Indexkörpern 44 hin- und her bewegt werden.

Der Tiefenanschlagkörper 41 ist an einer Führungskulisse 45, die Indexkörper 44 sind an einer Führungskulisse 46 der Tiefenanschlag-Lagereinrichtung 42 geführt.

Der Tiefenanschlagkörper 41 und die Indexkörper 44 sind jeweils individuell entlang der Führungskulisse in 45, 46 verstellbar und ortsfest festlegbar, beispielsweise verrastbar, verklemmbar oder dergleichen.

Die Frontanschlagfläche 21 ist an einem Grundkörper 100 der Anschlageinrichtung 20 angeordnet. Der Grundkörper 100 hat eine Winkelgestalt und stellt zum einen die Bodenfläche 22, zum anderen die Frontanschlagfläche 21 bereit. An dem Grundkörper 100 ist die Winkelanlageplatte 23 schwenkbeweglich gelagert.

Zur Einstellung variabler Querabstände der in das Werkstück W zu fräsenden Ausnehmung zu einer Seitenfläche des Werkstücks W, also zu einer Werkstück-Querseite Q, hat die Anschlageinrichtung 20 mehrere Verstellanschläge 110 an ihrer Frontseite, d.h. im Bereich der Frontanschlagfläche 21. Die Verstellanschläge 110 haben bezüglich einer Mittelachse 102 des Zerspanungswerkzeugs 13 bei dessen Pendelbewegung P oder - bezogen auf die Anschlageinrichtung 20 - bezüglich der Ausnehmung 28 verschiedene Querabstände.

Bei den Verstellanschlägen 110 ist ein optimiertes Bedienkonzept realisiert, gemäß dem die Verstellanschläge 110 sehr einfach hinter die Frontanschlagfläche 21 in Anschlagaufnahmen 106 zurückverstellbar sind und dort einrasten. Die Verstellanschläge 110 können vollständig in die Anschlagaufnahmen 106 eintauchen, wo sie dann ihre Ruhestellung R einnehmen.

Mittels einer Löseeinrichtung 130 können die Verstellanschläge 110 wieder aus der Verrastung gelöst werden, so dass sie vor die Frontanschlagfläche 21 selbsttätig vor schwenken. Hierfür ist eine Federbelastung vorgesehen, die in Figur 1 nicht sichtbar ist.

Das Bedienkonzept sieht vor, dass jeder Verstellanschlag 110 individuell in seine Anschlagaufnahme 106 hinein verstellt, vorliegend geschwenkt, werden kann und dort verrastet.

Eine Gruppe von mehreren, vorliegend 3, Verstellanschlägen 110 kann durch eine Betätigung einer ihnen zugeordneten Löseeinrichtung 130, beispielsweise durch Drücken eines Betätigungsvorsprungs 131 der Löseeinrichtung 130, aus dieser Verrastung gelöst werden, so dass die Verstellanschläge 110 wieder vor die Frontanschlagfläche 21 vor schwenken. Selbstverständlich wäre alternativ auch eine Schiebebewegung von Verstellanschlägen ohne weiteres möglich.

Der Tiefenanschlagkörper 41 hat Führungsarme 48, die die Führungskulisse 45 durchdringen. Der Tiefenanschlagkörper 41 ist beispielsweise in der Ausnehmung 47 angeordnet. Die Führungsarme 48 stehen durch die Führungskulisse 45, die vorzugsweise als ein Längsschlitz oder eine Längsnut ausgestaltet ist, nach oben aus der Ausnehmung 47 vor.

Die Führungsarme 48 bilden Betätigungsvorsprünge, mit denen der Tiefenanschlagkörper 41 von einem Widerlagerkörper 49 weg verstellt werden kann.

Der Tiefenanschlagkörper 41 und der Widerlagerkörper 49 sind beweglich aneinander gelagert. Die Führungsarme 48 sind beispielsweise an Führungsaufnahmen 50 des Widerlagerkörpers 49 linear geführt.

Eine weitere, auch zu den Führungsaufnahmen 50 alternative, Führung kann durch einen Befestigungsbolzen 51 und/oder einen Führungsvorsprung 53 gebildet sein, mit dem ein Haltestück 52 am Widerlagerkörper 49 befestigt ist. Der Befestigungsbolzen 51 ist in den Führungsvorsprung 53, der vor den Widerlagerkörper 49 vorsteht und eine Führungsöffnung 54 des Tiefenanschlagkörpers 41 durchdringt, eingeschraubt oder eingesteckt. Der Befestigungsbolzen 51 durchdringt das Haltestück 52.

Es versteht sich, dass eine derartige Befestigung und Führung optional ist. Beispielsweise kann das Haltestück 52 auch mittels Haltevorsprüngen 55 an Halteaufnahmen 56 des Führungsvorsprungs 53 befestigt sein, zum Beispiel angeklebt.

Eine weitere Führung wird beispielsweise durch Führungsvorsprünge 57 realisiert, die nach unten, entgegengesetzt zu den Führungsarmen 48, von dem Tiefenanschlagkörper 41 abstehen und das Haltestück 52 seitlich führen. An diesem sind beispielsweise Führungsausnehmungen 58 vorhanden. Das Haltestück 52 ist zwischen den Führungsvorsprüngen 57 geführt.

Der Widerlagerkörper 49 und der Tiefenanschlagkörper 41 sind im Sinne eines Haltens an der Tiefenanschlag-Lagereinrichtung 42, beispielsweise eines Verklemmens oder vorliegend eines Verrastens, angefedert. Beispielsweise durchdringt der Führungsvorsprung 53 eine Feder 59, die sich einerseits am Haltestück 52, andererseits am Tiefenanschlagkörper 41 abstützt.

Durch die Feder 59 wird der Tiefenanschlagkörper 41 zu dem Widerlagerkörper 49 hinbewegt, was dazu führt, dass eine Rastanordnung 60 des Tiefenanschlagkörpers 41 mit einer relativ zur Tiefenanschlag-Lagereinrichtung 42 und somit auch relativ zum Antriebsgehäuse 14 oder Antriebsteil 15 ortsfesten Rastanordnung 61 in Eingriff gelangt. Die Rastanordnung 61 erstreckt sich entlang des Einstellwegs 43, parallel zur Führungskulisse 45.

Die Rastanordnungen 60, 61 umfassen beispielsweise Zahnleisten.

Die Rastanordnung 60 ist an einer der Rastanordnung 61 zugewandten Seite des Tiefenanschlagkörpers 41 angeordnet, beispielsweise neben den Führungsarmen 48. Die Rastanordnung 60 umfasst eine Reihe von Zähnen 62.

Die Rastanordnung 61 ist an einer von 2 Seitenwänden 64 angeordnet, die sich neben der Führungskulisse 45 erstrecken und diese seitlich begrenzen und zweckmäßigerweise Oberwände der Aufnahme 47 bilden. Die Rastanordnung 61 ist an einer Unterseite einer der Seitenwände 64 angeordnet. Die Rastanordnung 61 umfasst eine Reihe von Zähnen 62, die nach unten zum Tiefenanschlagkörper 41 vorstehen.

Wenn also der Tiefenanschlagkörper 41 nach unten, von den Seitenwänden 64, sozusagen den Oberwänden der Aufnahme 47, weg bewegt wird, gelangen die Zähne 62, 63 außer Eingriff, so dass der Tiefenanschlagkörper 41 und der Widerlagerkörper 49 in der Art eines Schlittens entlang der Führungskulisse 45 hin- und her bewegt werden können. Der Widerlagerkörper 49 gleitet dabei mit einer Unterseite einer Platte 65, von der der Führungsvorsprung 53 nach unten absteht, auf der Oberseite der Seitenwände 64 der Führungskulisse 45 entlang.

Die Seitenwände 64 stehen in Zwischenräume zwischen dem Widerlagerkörper 49 und dem Tiefenanschlagkörper 41, zweckmäßigerweise der Platte 65, vor.

Die Platte 65 hat zudem einen Betätigungsvorsprung 66, der bequem von einem Bediener zur Längsverstellung des Tiefenanschlagkörpers 41 ergriffen werden kann. Der Betätigungsvorsprung 66 ist zwischen den Führungsaufnahmen 50 bzw. den Führungsarmen 48, die insofern Betätigungsarme bilden, angeordnet.

An sich gleitet der Tiefenanschlagkörper 41 frei entlang der Führungskulisse 45, wenn die Verrastung gelöst ist. Es ist jedoch vorteilhaft, wenn der Bediener eine haptische und/oder akustische Rückkoppelung über eine Längsverstellung erhält. So ist beispielsweise ein Rastvorsprung 67 vorgesehen, der zu einer Rastanordnung 68 neben der Führungskulisse 45 vorsteht. Wenn der Tiefenanschlagkörper 41 entlang der Führungskulisse 45 verstellt wird, "rattert" der Rastvorsprung 67 an der Rastanordnung 68, beispielsweise einer Zahlenreihe, die am Antriebsgehäuse 14 angeordnet und ist und zur Führungskulisse 45 vorsteht, entlang. Der Rastvorsprung 67 und die Rastanordnung 68 sorgen jedoch nicht für einen formschlüssigen Halt des Tiefenanschlagkörpers 41 an der Tiefenanschlag-Lagereinrichtung 42, sondern der Rast-Eingriff der Rastanordnungen 60, 61 ineinander.

Zur Anzeige einer jeweiligen Längsposition des Tiefenanschlagkörpers 41 an der Tiefenanschlag-Lagereinrichtung 42 dient ein Indexvorsprung 69 am Widerlagerkörper 49, der auf eine Skala 70 der Tiefenanschlaganordnung 40 zeigt.

Die Führungsarme 48 und der Führungsvorsprung 53 stehen an voneinander entgegengesetzten Seiten von dem an sich zweckmäßigerweise plattenartigen Tiefenanschlagkörper 41 ab. Vorzugsweise ist an einer dem Führungselement 31 oder dem Stab 33 zugewandten Stirnseite des Tiefenanschlagkörpers 41 eine Anschlag-Ausnehmung 71 vorgesehen, in die das Führungselement 31 mit seinem in die Ausnehmung 47 eintauchenden Längsende eingreifen kann.

Der Tiefenanschlagkörper 41 stützt sich beidseits der Führungsarme 48 von unten her an den Seitenwänden 64 ab, nämlich einerseits mit der Rastanordnung 60, andererseits mit einem Stützvorsprung 72.

Die Indexkörper 44 sind entlang der Führungskulisse 46 verschieblich gelagert. Die Indexkörper 44 sind vorliegend mehrteilig ausgestaltet, das heißt sie umfassen einen Rastkörper 73 und einen Betätigungskörper 74, die mittels Bolzen, Schrauben 75 oder sonstigen Befestigungsmitteln miteinander verbunden sind. Vor die an sich plattenartigen Betätigungskörper 74 stehen Führungsvorsprünge 76 vor, in die die Bolzen 75 eindringen.

Die Führungsvorsprünge 76 durchdringen Ausnehmungen 77 von Widerlagerkörpern 78, die an der Führungskulisse 46 verschieblich gelagert sind.

Die Widerlagerkörper 78 weisen den einen Führungsvorsprung 79 auf, der in die Führungskulisse 46 eingreift. Der Führungsvorsprung 79 ist beispielsweise quaderförmig, so dass die Widerlagerkörper 78 verdrehsicher in der Führungskulisse 46 geführt sind.

Zudem steht ein Index 80 von den Widerlagerkörpern 78 ab, der auf die Skala 70 zeigt. Somit kann die jeweilige Längsposition eines Indexkörpers 44 bezüglich des Einstellwegs 43 leicht abgelesen und eingestellt werden.

Optional sind für die Betätigungskörper 74 Vertiefungen an den Widerlagerkörpern 78 angeordnet.

Von den Rastkörpern 73 stehen Rastvorsprünge 81 ab, die zur Verrastung mit neben der Führungskulisse 46 angeordneten Rastausnehmungen 82 verrasten können. Die Rastausnehmungen 82 sind in der Art von Zahlenreihen oder -leisten ausgestaltet.

Die Rastausnehmungen 82 befinden sich an Seitenwänden 83, die die Führungskulisse 46 seitlich begrenzen.

Die Widerlagerkörper 78 gleiten an den Rastausnehmungen 82 entgegengesetzten Flächen der Seitenwände 83 entlang.

Die Seitenwände 83 greifen also in Zwischenräume ein, die zwischen den Rastvorsprüngen 82 und den vor den jeweiligen Führungsvorsprung 79 des Widerlagerkörpers 78 seitlich vorstehenden Abschnitten des Widerlagerkörpers 78 vorgesehen sind.

Zwischen den Widerlagerkörpern 78 und den Betätigungskörpern 74 sind Federn 84 angeordnet. Die Federn 84 belasten die Rastkörper 73 im Sinne eines Verrastens mit den Rastausnehmungen 82.

Wenn ein jeweiliger Betätigungskörper 74 zum Widerlagerkörper 78 hin gedrückt wird, gelangen die Rastvorsprünge 81 außer Eingriff mit den Rastausnehmungen 82, so dass der jeweilige Indexkörper 44 freikommt und entlang der Führungskulisse 46 verschoben werden kann. In umgekehrter Richtung sind die Federn 84 aktiv, d.h. sie sorgen für eine selbsttätige Verrastung des Indexkörpers 44 mit einer jeweiligen Rastanordnung, die die Rastausnehmungen 82 umfasst.

Die Seitenwände 83 bilden einen Bestandteil eines Lagerkörpers 85, der lösbar mit dem Antriebsgehäuse 14 verbindbar ist. Es versteht sich, dass dies eine Montageerleichterung darstellt, d.h. dass selbstverständlich auch eine mit dem Antriebsgehäuse einer Hand-Werkzeugmaschine einstückige Lagereinrichtung für mindestens einen Indexkörper möglich ist. Des Weiteren besteht auch die Möglichkeit, dass ein Lagerkörper in der Art des Lagerkörpers 85 beispielsweise eine Führungskulisse für einen Tiefenanschlagkörper bereitstellt, so dass nicht wie beim Ausführungsbeispiel die Führungskulisse 45 einen Bestandteil des Antriebsgehäuses 14 bildet bzw. mit diesem einstückig ist, sondern an einem davon separaten Bauteil vorgesehen ist.

Der Lagerkörper 85 umfasst eine Bodenwand 86, die die Ausnehmung 47 von unten her verschließt, sowie eine Seitenwand 87, an der die Skala 70 und die Führungskulisse 46 angeordnet sind. Der Lagerkörper 85 ist beispielsweise mit Montagebolzen 88, zum Beispiel Schrauben, an das Antriebsgehäuse 14 angeschraubt.

Vorteilhaft ist zudem noch vorgesehen, dass der Lagerkörper 85 mindestens ein Führungselement 31 führt. Hierzu ist beispielsweise eine Führungsausnehmung 89 vorgesehen, die eine dem Stab 33 angepasste Führungskontur enthält.

## Patentansprüche

1. Hand-Werkzeugmaschine, insbesondere Dübelfräse, mit einem Antriebsteil (15), das mindestens ein Zerspanungswerkzeug (13) zum Bohren und/oder Fräsen einer Ausnehmung in eine Werkstück-Frontseite (F) eines Werkstücks (W) und einen motorischen Antrieb für das mindestens eine Zerspanungswerkzeug (13) aufweist, und mit einer Anschlageinrichtung (20), die eine Frontanschlagfläche (21) zur Anlage an das Werkstück (W) aufweist, und mit einer Führungsanordnung (30) zum Führen des Antriebsteils (15) und der Anschlageinrichtung (20) relativ zueinander, so dass das mindestens eine Zerspanungswerkzeug (13) relativ zu der Frontanschlagfläche (21) entlang eines Tiefenverstellwegs (T) zur Einstellung einer Eindringtiefe des mindestens einen Zerspanungswerkzeugs (13) in das Werkstück (W) vor und zurückverstellbar ist, und mit einer Tiefenanschlaganordnung (40) zur Begrenzung einer Länge des Tiefenverstellwegs, wobei die Tiefenanschlaganordnung (40) eine Anschlagfläche und mindestens einen Tiefenanschlagkörper (41) aufweist, der zur Verstellung der Eindringtiefe des mindestens einen Zerspanungswerkzeugs (13) in das Werkstück (W) an einer Tiefenanschlag-Lagereinrichtung (42) beweglich gelagert und fixierbar ist, und wobei die Tiefenanschlagfläche an der Anschlageinrichtung (20) und die Tiefenanschlag-Lagereinrichtung (42) am Antriebsteil (15) oder umgekehrt ortsfest fixiert oder ortsfest fixierbar angeordnet sind, **dadurch gekennzeichnet, dass** die Tiefenanschlaganordnung (40) als einen Längsanschlag für den mindestens einen Tiefenanschlagkörper (41) an dessen Einstellweg (43) mindestens einen Indexkörper (44) aufweist, der bezüglich des Einstellwegs (43) des mindestens einen Tiefenanschlagkörpers (41) separat von dem mindestens einen Tiefenanschlagkörper (41) an der Tiefenanschlag-Lagereinrichtung (42) beweglich gelagert ist.

2. Hand-Werkzeugmaschine nach Anspruch 1, **dadurch gekennzeichnet, dass** der mindestens eine Indexkörper (44) an der Tiefenanschlag-Lagereinrichtung (42) parallel zu dem Tiefenverstellweg oder quer dazu beweglich gelagert und fixierbar ist.

3. Hand-Werkzeugmaschine nach Anspruch 1 oder 2, **dadurch gekennzeichnet, dass** der mindestens eine Indexkörper (44) und der mindestens eine Tiefenanschlagkörper (41) an der Tiefenanschlag-Lagereinrichtung (42) parallel zueinander geführt sind.

4. Hand-Werkzeugmaschine nach einem der vorhergehenden Ansprüche, **dadurch gekennzeichnet, dass** der mindestens eine Tiefenanschlagkörper (41) und/oder der mindestens eine Indexkörper (44) an der Tiefenanschlag-Lagereinrichtung (42) linear beweglich und/oder schwenkbeweglich gelagert sind.

5. Hand-Werkzeugmaschine nach einem der vorhergehenden Ansprüche, **dadurch gekennzeichnet, dass** der mindestens eine Tiefenanschlagkörper (41) und/oder der mindestens eine Indexkörper (44) an der Tiefenanschlag-Lagereinrichtung (42) verrastbar und/oder mit dieser verklemmbar sind.

6. Hand-Werkzeugmaschine nach einem der vorhergehenden Ansprüche, **dadurch gekennzeichnet, dass** der mindestens eine Tiefenanschlagkörper (41) und ein Anschlag-Widerlagerkörper (49) und/oder der mindestens eine Indexkörper (44) und ein Index-Widerlagerkörper (78) beweglich, insbesondere schiebebeweglich, zwischen einer Lösestellung und einer Fixierstellung miteinander verbunden sind, wobei der mindestens eine Tiefenanschlagkörper (41) oder der mindestens eine Indexkörper (44) bezüglich der Tiefenanschlag-Lagereinrichtung (42) in der Lösestellung beweglich und in der Fixierstellung ortsfest fixiert, insbesondere verrastet und/oder verklemmt, ist.

7. Hand-Werkzeugmaschine nach Anspruch 6, **dadurch gekennzeichnet, dass** zwischen dem mindestens einen Tiefenanschlagkörper (41) und dem Anschlag-Widerlagerkörper (49) und/oder zwischen dem mindestens einen Indexkörper (44) und dem Index-Widerlagerkörper (78) eine in Richtung der Fixierstellung wirkende Feder (59; 84) angeordnet ist.

8. Hand-Werkzeugmaschine nach einem der vorhergehenden Ansprüche, **dadurch gekennzeichnet, dass** der mindestens eine Tiefenanschlagkörper (41) und/oder der mindestens eine Indexkörper (44) einen Schlitten umfasst oder an einem Schlitten angeordnet ist, der insbesondere gleitbeweglich an einer Führungsbahn der Tiefenanschlag-Lagereinrichtung (42) gelagert ist.

9. Hand-Werkzeugmaschine nach einem der vorhergehenden Ansprüche, **dadurch gekennzeichnet, dass** der mindestens eine Tiefenanschlagkörper (41) und der mindestens eine Indexkörper (44) an voneinander separaten, insbesondere rechtwinkelig zueinander verlaufenden Führungen (45, 46) beweglich gelagert sind.

10. Hand-Werkzeugmaschine nach einem der vorhergehenden Ansprüche, **dadurch gekennzeichnet, dass** der mindestens eine Tiefenanschlagkörper (41) zwischen zwei Indexkörpern (44) beweglich gelagert ist.

11. Hand-Werkzeugmaschine nach Anspruch 10, **dadurch gekennzeichnet, dass** die zwei Indexkörper (44) in einem festen Relativ-Abstand zueinander festgelegt oder individuell an der Tiefenanschlag-Lagereinrichtung (42) beweglich gelagert sind.

12. Hand-Werkzeugmaschine nach einem der vorhergehenden Ansprüche, **dadurch gekennzeichnet, dass** die Tiefenanschlagfläche an einem Führungselement (31), insbesondere einer Führungsstange, der Führungsanordnung (30) vorgesehen ist.

13. Hand-Werkzeugmaschine nach einem der vorhergehenden Ansprüche, **dadurch gekennzeichnet, dass** ein Führungselement (31) der Führungsanordnung (30) in einen Lagerkörper oder eine Aufnahme der Tiefenanschlag-Lagereinrichtung (42) eindringt.

14. Hand-Werkzeugmaschine nach einem der vorhergehenden Ansprüche, **dadurch gekennzeichnet, dass** das Antriebsteil (15) durch eine insbesondere im Bereich der Führungsanordnung (30) angeordnete Rückstellfeder (36) im Sinne einer Verstellung von der Anschlageinrichtung (20) weg und somit einer Verringerung der Eindringtiefe des mindestens einen Zerspanungswerkzeugs (13) in das Werkstück (W) beaufschlagt ist.

## Claims

1. Manually operated machine tool, in particular dowel cutter, comprising a drive part (15) having at least one machining tool (13) for drilling and/or cutting a recess in a workpiece front side (F) of a workpiece (W) and a motorised drive for the at least one machining tool (13), and further comprising a stop device (20) having a front stop surface (21) for contact with the workpiece (W), and further comprising a guide arrangement (30) for guiding the drive part (15) and the stop device (20) relative to one another, so that the at least one machining tool (13) can be adjusted forwards and backwards relative to the front stop surface (21) along a depth adjustment path (T) for setting a penetration depth of the at least one machining tool (13) into the workpiece (W), and further comprising a depth stop arrangement (40) for limiting a length of the depth adjustment path, wherein the depth stop arrangement (40) comprises a stop surface and at least one depth stop body (41), which is movably mounted and locatable on a depth stop bearing device (42) for adjusting the penetration depth of the at least one machining tool (13) into the workpiece (W), and wherein the depth stop surface is or can be located in a fixed way on the stop device (20) and the depth stop bearing device (42) is or can be located in a fixed way on the drive part (15) or vice versa, **characterised in that** the depth stop arrangement (40) comprises as a longitudinal stop for the at least one depth stop body (41) on the adjustment path (43) thereof at least one indexing body (44), which is movably mounted on the depth stop bearing device (42) separately from the at least one depth stop body (41) relative to the adjustment path (43) of the at least one depth stop body (41).

2. Manually operated machine tool according to claim 1, **characterised in that** the at least one indexing body (44) is mounted and locatable on the depth stop bearing device (42) while being capable of movement parallel or transverse to the depth adjustment path.

3. Manually operated machine tool according to claim 1 or 2, **characterised in that** the at least one indexing body (44) and the at least one depth stop body (41) are guided in parallel on the depth stop bearing device (42).

4. Manually operated machine tool according to any of the preceding claims, **characterised in that** the at least one depth stop body (41) and/or the at least one indexing body (44) is/are mounted on the depth stop bearing device (42) for linear and/or pivoting movement.

5. Manually operated machine tool according to any of the preceding claims, **characterised in that** the at least one depth stop body (41) and/or the at least one indexing body (44) is/are capable of latching and/or clamping to the depth stop bearing device (42).

6. Manually operated machine tool according to any of the preceding claims, **characterised in that** the at least one depth stop body (41) and a stop abutment body (49) and/or the at least one indexing body (44) and an indexing abutment body (78) are movably joined to one another, being in particular capable of sliding between a release position and a fixing position, wherein the at least one depth stop body (41) or the at least one indexing body (44) is movable relative to the depth stop bearing device (42) in the release position and located in a fixed way, in particular latched and/or clamped, in the fixing position.

7. Manually operated machine tool according to claim 6, **characterised in that** a spring (59; 84) acting in the direction of the fixing position is provided between the at least one depth stop body (41) and the stop abutment body (49) and/or between the at least one indexing body (44) and the indexing abutment body (78).

8. Manually operated machine tool according to any of the preceding claims, **characterised in that** the at least one depth stop body (41) and/or the at least one indexing body (44) comprise(s) a slide or is/are mounted on a slide which is in particular slidably mounted on a guideway of the depth stop bearing device (42).

9. Manually operated machine tool according to any of the preceding claims, **characterised in that** the at least one depth stop body (41) and the at least one indexing body (44) are movably mounted on separate guides (45, 46), which extend at right angles to one another in particular.

10. Manually operated machine tool according to any of the preceding claims, **characterised in that** the at least one depth stop body (41) is movably mounted between two indexing bodies (44).

11. Manually operated machine tool according to claim 10, **characterised in that** the two indexing bodies (44) are located at a fixed relative distance from one another or movably mounted individually on the depth stop bearing device (42).

12. Manually operated machine tool according to any of the preceding claims, **characterised in that** the depth stop surface is provided on a guide element (31), in particular on a guide bar of the guide arrangement (30).

13. Manually operated machine tool according to any of the preceding claims, **characterised in that** the guide element (31) of the guide arrangement (30) penetrates into a bearing body or into a receptacle of the depth stop bearing device (42).

14. Manually operated machine tool according to any of the preceding claims, **characterised in that** the drive part (15) is acted on by a return spring (36), which is in particular located in the region of the guide arrangement (30), towards an adjustment away from the stop device (20) and thus towards a reduction of the penetration depth of the at least one machining tool (13) into the workpiece (W).

## Revendications

1. Machine-outil manuelle, en particulier fraiseuse de cheville, avec une partie d'entraînement (15) qui présente au moins un outil d'usinage (13) pour le forage et/ou le fraisage d'un évidement dans un côté avant de pièce (F) d'une pièce (W) et un entraînement motorisé pour l'au moins un outil d'usinage (13), et avec un dispositif de butée (20), qui présente une surface de butée avant (21) pour l'appui contre la pièce (W), et avec un agencement de guidage (30) pour le guidage de la partie d'entraînement (15) et du dispositif de butée (20) l'un par rapport à l'autre, de sorte que l'au moins un outil d'usinage (13) puisse être déplacé alternativement par rapport à la surface de butée avant (21) le long d'une course de déplacement en profondeur (T) pour le réglage d'une profondeur d'enfoncement de l'au moins un outil de d'usinage (13) dans la pièce (W), et avec un agencement de butée de profondeur (40) pour la délimitation d'une longueur de la course de déplacement de profondeur, l'agencement de butée de profondeur (40) présentant une surface de butée et au moins un corps de butée de profondeur (41), qui est logé et peut être fixé de manière mobile pour le réglage de la profondeur d'enfoncement de l'au moins un outil de d'usinage (13) dans la pièce (W) sur un dispositif de palier de butée de profondeur (42), et la surface de butée de profondeur étant agencée fixée ou fixable de manière stationnaire sur le dispositif de butée (20) et le dispositif de palier de butée de profondeur (42) sur la partie d'entraînement (15) ou inversement, **caractérisée en ce que** l'agencement de butée de profondeur (40) présente comme butée longitudinale pour l'au moins un corps de butée de profondeur (41) sur sa course de réglage (43) au moins un corps d'index (44), qui est logé de manière mobile par rapport à la course de réglage (43) de l'au moins un corps de butée de profondeur (41) séparément de l'au moins un corps de butée de profondeur (41) sur le dispositif de palier de butée de profondeur (42).

2. Machine-outil manuelle selon la revendication 1, **caractérisée en ce que** l'au moins un corps d'index (44) est logé et peut être fixé de manière mobile sur le dispositif de palier de butée de profondeur (42) parallèlement à la course de déplacement de profondeur ou transversalement à celle-ci.

3. Machine-outil manuelle selon la revendication 1 ou 2, **caractérisée en ce que** l'au moins un corps d'index (44) et l'au moins un corps de butée de profondeur (41) sont guidés parallèlement l'un à l'autre sur le dispositif de palier de butée de profondeur (42).

4. Machine-outil manuelle selon l'une quelconque des revendications précédentes, **caractérisée en ce que** l'au moins un corps de butée de profondeur (41) et/ou l'au moins un corps d'index (44) sont logés de manière mobile linéairement et/ou en pivotement sur le dispositif de palier de butée de profondeur (42).

5. Machine-outil manuelle selon l'une quelconque des revendications précédentes, **caractérisée en ce que** l'au moins un corps de butée de profondeur (41) et/ou l'au moins un corps d'index (44) peuvent être encliquetés sur le dispositif de palier de butée de profondeur (42) et/ou peuvent être serrés avec celui-ci.

6. Machine-outil manuelle selon l'une quelconque des revendications précédentes, **caractérisée en ce que** l'au moins un corps de butée de profondeur (41) et un corps de contre-appui de butée (49) et/ou l'au moins un corps d'index (44) et un corps de contre-appui d'index (78) sont reliés entre eux de manière mobile, en particulier de manière coulissante, entre une position de détachement et une position de fixation, l'au moins un corps de butée de profondeur (41) ou l'au moins un corps d'index (44) étant mobile par rapport au dispositif de palier de butée de profondeur (42) dans la position de détachement et fixé de manière stationnaire dans la position de fixation, en particulier encliqueté et/ou serré.

7. Machine-outil manuelle selon la revendication 6, **caractérisée en ce qu'**un ressort (59 ; 84) agissant en direction de la position de fixation est agencé entre l'au moins un corps de butée de profondeur (41) et le corps de contre-appui de butée (49) et/ou entre l'au moins un corps d'index (44) et le corps de contre-appui d'index (78).

8. Machine-outil manuelle selon l'une quelconque des revendications précédentes, **caractérisée en ce que** l'au moins un corps de butée de profondeur (41) et/ou l'au moins un corps d'index (44) comporte un chariot ou est agencé sur un chariot qui est logé en particulier de manière glissante sur une bande de guidage du dispositif de palier de butée de profondeur (42).

9. Machine-outil manuelle selon l'une quelconque des revendications précédentes, **caractérisée en ce que** l'au moins un corps de butée de profondeur (41) et l'au moins un corps d'index (44) sont logés de manière mobile sur des guidages (45, 46) séparés l'un de l'autre, s'étendant en particulier à angles droits l'un par rapport à l'autre.

10. Machine-outil manuelle selon l'une quelconque des revendications précédentes, **caractérisée en ce que** l'au moins un corps de butée de profondeur (41) est logé de manière mobile entre deux corps d'index (44).

11. Machine-outil manuelle selon la revendication 10, **caractérisée en ce que** les deux corps d'index (44) sont fixés à une distance relative fixe l'un par rapport à l'autre ou sont logés individuellement de manière mobile sur le dispositif de palier de butée de profondeur (42).

12. Machine-outil manuelle selon l'une quelconque des revendications précédentes, **caractérisée en ce que** la surface de butée de profondeur est prévue sur un élément de guidage (31), en particulier une tige de guidage, de l'agencement de guidage (30).

13. Machine-outil manuelle selon l'une quelconque des revendications précédentes, **caractérisée en ce qu'**un élément de guidage (31) de l'agencement de guidage (30) pénètre dans un corps de palier ou un logement du dispositif de palier de butée de profondeur (42).

14. Machine-outil manuelle selon l'une quelconque des revendications précédentes, **caractérisées en ce que** la partie d'entraînement (15) est sollicitée par un ressort de rappel (36) agencé en particulier dans la zone de l'agencement de guidage (30) au sens d'un déplacement en éloignement du dispositif de butée (20) et ainsi d'une réduction de la profondeur d'enfoncement de l'au moins un outil de d'usinage (13) dans la pièce (W).
